# EUROPÄISCHE PATENTSCHRIFT

(11) **EP 2 062 708 B1**
(45) Veröffentlichungstag und Bekanntmachung des Hinweises auf die Patenterteilung: **23.05.2012**
(21) Anmeldenummer: 08020150.2
(22) Anmeldetag: 19.11.2008
(51) Int. Cl.: B27N 3/04, B27N 3/14, C08G 18/76, C08L 97/02, C08K 5/36

(54) **Verfahren zur Verminderung der Emission von gesättigten und ungesättigten Aldehyden aus Holzwerkstoffen**
Method of reducing the emission of saturated and unsaturated aldehydes in wooden materials
Procédé destiné à la réduction de l'émission d'aldéhydes saturés et insaturés à partir de matières dérivées du bois

(30) Priorität: 19.11.2007 DE 102007055415
(43) Veröffentlichungstag der Anmeldung: 27.05.2009
(73) Patentinhaber: Kronotec AG, 6006 Luzern (CH)
(72) Erfinder:
(74) Vertreter: Kröncke, Rolf

(56) Entgegenhaltungen:
- WO-A-2006/032267
- WO-A-2007/000418
- WO-A-2008/129048
- DE-A1- 2 027 085
- DE-A1-102004 050 278
- US-A- 3 481 828
- BLECHSCHMIDT J ET AL: "EIN- UND MEHRSTUFIGE BLEICHE VON HOCHAUSBEUTEFASERSTOFFEN MIT WASSERSTOFFPEROXID UND FORMAMIDINSULFINSAEURE" IPW INTERNATIONAL PAPER WORLD, DPW VERLAGSGESELLSCHAFT MBH, HEUSENSTAMM, DE, Bd. 45, Nr. 5, 1. Mai 1991 (1991-05-01), Seiten 221-225, XP000206284 ISSN: 0031-1340

## Beschreibung

Die vorliegende Erfindung betrifft die Verwendung von Formamidinsulfinsäure bei der Herstellung von Holzwerkstoffen aus Lignocellulose, wobei diese Holzwerkstoffe eine verminderte Emission von flüchtigen organischen Verbindungen (VOC) und hier insbesondere der gesättigten und ungesättigten Aldehyden und anderen aufweisen. Genauer betrifft die vorliegende Erfindung die Verwendung von Formamidinsulfinsäure bei der Herstellung von Holzwerkstoffen mit verminderter Emission von VOC, insbesondere gesättigten und ungesättigten Aldehyden, bei denen den Zerkleinerungsprodukten vor dem Verpressen neben den üblichen Klebstoffen weiterhin mindestens ein Additiv zugesetzt wird. Erfindungsgemäß ist dieses Additiv Formamidinsulfinsäure. Die vorliegende Erfindung betrifft außerdem gemäß dieser Verwendung herstellbare Holzwerkstoffe, insbesondere OSB-Platten und leichte und superleichte MDF-Platten. Schließlich stellt die vorliegende Erfindung Additive zur Verringerung der Emission von VOC bereit, die für die Behandlung von Holzwerkstoffen geeignet sind.

### Stand der Technik

Die Emission von flüchtigen und sehr flüchtigen Holzinhaltsstoffen, insbesondere von gesättigten und ungesättigten Aldehyden einschließlich Formaldehyd und anderen flüchtigen Holzinhaltsstoffen (volatile organic compounds, VOC) aus Holzprodukten einschließlich Vollholz und Holzwerkstoffplatten stellt aufgrund verschärfter Grenzwerte bzw. einer größeren Sensibilisierung der Endverbraucher mehr und mehr ein Problem dar. Als flüchtige organische Verbindungen (VOC) werden alle flüchtigen organischen Stoffe subsumiert, deren Retentionszeit im Gaschromatogramm zwischen C6 (Hexan) und C16 (Hexadecan) liegt. Der Ausdruck Aldehyde, wie er hier vorliegend verwendet wird, umfasst alle Aldehyde, die in gesättigter oder ungesättigter Form vorliegen können.

Dieses durch die VOC aber auch den sehr flüchtigen organischen Verbindungen (WOC), z. B. Formaldehyd hervorgerufene Problem ist umso gravierender, da die verstärkte Nutzung von holzenthaltende bzw. aus Holz bestehende Produkte aus ökologischen Gründen immer stärker in den Vordergrund rückt. Die Reduzierung der Aldehyde und anderer VOCs stellt sich als schwierig heraus, weil es sich bei diesen Verbindungsgruppen um eine sehr inhomogene Gruppe von flüchtigen organischen Verbindungen handelt. So wurden unter anderem in Holz und Holzprodukten die folgenden Substanzklassen nachgewiesen: Säuren, Aldehyde, Ketone, Alkohole, aliphatische und aromatische Kohlenwasserstoffe, Terpene usw. Grundsätzlich treten diese verschiedenen Substanzen je nach Holzart, Lagerungsdauer/- bedingungen und Weiterverarbeitungsschritten in stark variierenden Mengen auf. Auch die Verwendung, die Einbaubedingungen und klimatischen Gegebenheiten in der Nutzung haben Einfluss auf die Art und Menge der Emissionen. Die VOCs können dabei im Wesentlichen aus bereits vorhandenen, aus biologischen/chemischen Abbau entstehenden oder aus durch Bearbeitungsvorgänge sich bildenden Verbindungen bestehen. Vor allem im Holz der Nadelbäume finden sich diese Bestandteile wieder.

Vor allem Nadelhölzer, aus denen vorwiegend Spanplatten, mitteldichte Faserplatten (MDF) oder OSB-Platten hergestellt werden, enthalten große Mengen Harz und Fette, die zur Bildung von flüchtigen organischen Terpenverbindungen und Aldehyden führen. Teilweise entstehen diese Stoffe auch durch Abbau der Hauptbestandteile des Holzes, wie Lignin, Cellulose und Hemicellulose. Aber auch durch die Verwendung bestimmter Klebstoffe für die Herstellung der Holzwerkstoffe können VOCs und Aldehyde entstehen. Umwandlungsprodukte, die u. a. während der Lagerung und der Bearbeitung des Holzes und der Zerkleinerungsprodukte auftreten, sind z. B. Pentanal und Hexanal. D. h. nicht nur durch die verwendeten Klebstoffe, sondern insbesondere auch bei der späteren Nutzung der Holzwerkstoffe werden aus dem Holz selbst flüchtige Bestandteile emittiert.

Aufgrund der Heterogenität der flüchtigen organischen Verbindungen in den Holzwerkstoffen ist eine Reduzierung dieser sehr schwierig. Zumal eine Maßnahme, die eine Substanzklasse verringert, möglicherweise eine andere vermehrt oder unbeeinflusst lässt. Es ist eine allgemein bekannte Tatsache, dass alle Holzwerkstoffe einschließlich Spanplatten, Faserplatten und OSB-Platten sowohl gesättigte und ungesättigte flüchtige Aldehyde als auch andere VOC an die Raumluft abgeben. Diese Emissionen beruhen sowohl auf den chemischen Abbau innerhalb des Holzes als auch durch chemischen Abbau der verwendeten aldehydhaltigen Bindemittel. Die anderen VOC Emissionen beruhen dagegen hauptsächlich auf holzbedingte Freisetzungen von so genannten Primäremissionen von leicht flüchtigen Holzinhaltsstoffen, wie Terpenen oder chemischen Abbauprodukten, wie Essigsäure und so genannte Sekundär- bzw. Tertiäremissionen, z. B. höhere Aldehyde, wie Pentanal oder höhere Carbonsäuren. Diese Abbauprodukte entstehen durch langandauernde Oxidationsprozesse von Holzinhaltsstoffen, wie Fettsäuren, aber auch Lignin, Cellulose und Hemicellulose.

Als besonders kritische Verbindungen sind in der heterogenen Gruppe der flüchtigen organischen Verbindungen die gesättigten oder ungesättigten Aldehyde einzustufen. Diese sind nicht nur toxisch sondern zum Teil auch karzinogen. Sie entstehen bei der Herstellung von Holzwerkstoffen und werden insbesondere von OSB-Platten zeitverzögert durch Fragmentierung von ungesättigten Fettsäuren freigesetzt. Gerade für OSB-Platten im konstruktiven Bereich ist dieses von großem Nachteil, da bei dieser Anwendung die OSB-Platten keine emissionsmindernde Beschichtung aufweisen und in großen Mengen insbesondere als Fläche der Platte bezogen auf die Gesamt-Kubikmeterzahl des Raumes oder des Gebäudes, verbaut wird.

Ein weiteres Problem ist der verstärkte Einsatz von sehr leichten Holzwerkstoffen, insbesondere von leichten und superleichten MDF zur Wärmedämmung. Bei diesen Produkten bewegt sich die Emission von leicht flüchtigen Substanzen auf ein niedrigeres Niveau als bei OSB-Platten. Allerdings emittieren hier verstärkt Aldehyde, z. B. cyclische Aldehyde, die als einzige Emission problematischer sind. Diese Problematik ergibt sich sowohl durch die Emissionsmenge als auch durch die Toxizität der Verbindung.

Wie bereits oben ausgeführt, werden auch durch die verwendeten Klebstoffe während der Herstellung oder anschließend während der Verwendung flüchtige organische Verbindungen insbesondere Aldehyde freigesetzt. Zu den Klebstoffen, wie sie derzeit in der Herstellung von Holzwerkstoffen, wie OSB-Platten, mitteldichte Faserplatten usw. verwendet werden, zählen Aminoplast-Klebstoffe, wie Harnstoff-Formaldehyd-Klebestoffe (UF-Klebstoffe), Melamin-Harnstoff-Phenol-Formaldehyd-Klebstoffe (MUPF-Klebstoffe) oder Melamin-Harnstoff-Formaldehyd-Klebstoffe (MUF-Klebstoffe). Weitere Klebstoffe, wie sie typischerweise bei Holzwerkstoffen eingesetzt werden, umfassen Klebstoffe auf Basis von Diisocyanaten (PMDI), Polyurethanklebstoffe, Phenol-Formaldehyd-Klebstoffe (PF-Klebstoffe) und/oder Tannin-Formaldehyd-Klebstoffe (TF-Klebstoffe) oder Gemische hiervon. Dabei finden im Faserplattenbereich hauptsächlich Aminoplast-Klebstoffe Verwendung. Hier tritt eine Freisetzung der Aldehyde und anderen VOCs sowohl während der Herstellung der Holzwerkstoffe als auch nach deren Herstellung oder bei ihrer Anwendung statt. Bei der Faserplattenherstellung kann es z. B. bei der thermohydrolytischen Behandlung der Lignocellulose-haltigen Materialien zu einem chemischen Teilabbau des Holzes kommen. Die dabei entstehenden, leicht flüchtigen Verbindungen, wie Aldehyde und Säuren emittieren dann während des späteren Herstellungsverfahrens oder bei späterer Nutzung der hergestellten Holzwerkstoffe. Sie können ebenfalls einen negativen Einfluss auf die Verklebungsfestigkeit haben und somit die Eigenschaften der hergestellten Holzwerkstoffe negativ beeinflussen.

Auf dem Gebiet der Entfärbung von Substanzen, z. B. zum Entfärben von Textilien oder von Papier sind verschiedene Reduktionsmittel bzw. Bleichmittel bekannt. So beschreibt die DE 10 2006 007630 eine Entfärbermischung umfassend Thioharnstoffdioxid, auch bekannt unter dem Namen Formamidinsulfinsäure, und mindestens ein Aktivierungsmittel, sowie deren Verwendung.

Als weiteres Reduktionsmittel ist z. B. Natriumdithionit bekannt. Diese Verbindungen finden u. a. Anwendung in der Papierindustrie im so genannten Deinking-Prozess bei dem Farbstoffe, die sehr stabile Doppelbindungen besitzen, zu gesättigten Verbindungen reduziert werden, die farblos sind. Allerdings erfordert der Einsatz dieser Reduktionsmittel in dem Deinking-Prozess eine sehr genaue Dosierung dieser Mittel, um den Abbauprozess der Farbstoffe zu steuern.

Es war nun Aufgabe der vorliegenden Erfindung Additive bereit zu stellen, die bereits vorhandene aber auch sich neu bildende gesättigte und ungesättigte flüchtige Aldehyde sowie andere flüchtige organische Verbindungen (VOC) in weniger toxische Verbindungen umwandeln, um so insbesondere die Aldehydemission aber auch die Emission anderer VOC von Holzwerkstoffen zu reduzieren und auf ein niedriges Niveau zu begrenzen. Dabei sollte so wenig wie möglich in den technologischen Prozess der Holzwerkstoffherstellung eingegriffen werden, um aufwendige technologische Anpassung oder Umbaumaßnahmen zu vermeiden und um wirtschaftlich zu sein. Dabei dürfen natürlich die Reduktionsmittel selbst während der Herstellung oder bei der späteren Verwendung, nicht toxisch oder karzinogen wirken.

### Beschreibung der Erfindung

Die Aufgabe wird dadurch gelöst, dass eine spezielle Zusammensetzung den Lignocellulose-haltigen Zerkleinerungsprodukten zugesetzt wird, um durch Umsetzung mit den gesättigten oder ungesättigten Aldehyden und den anderen VOCs diese so zu verändern, dass sie nicht mehr aus den Zerkleinerungsprodukten bzw. aus diesen Zerkleinerungsprodukten hergestellten Holzwerkstoffen emittieren. Die zugegebenen Additive weisen ein hohes Reduktionspotenzial auf. Insbesondere handelt es sich dabei um Schwefelverbindungen, in denen der Schwefel in niedriger Oxidationsstufe vorliegt.

Die durch Reduktion entstehenden Verbindungen sind derart, dass sie nicht mehr flüchtig sind und somit nicht mehr zu den VOC Emissionen bzw. Aldehydemissionen beitragen bzw. die Toxizität der entstehenden Verbindungen ist deutlich reduziert.

Insbesondere Aldehyden aber auch anderen organischen Verbindungen dienen die Reduktionsmittel als Elektronenquelle und mit deren Hilfe werden die Aldehyde und andere VOC in weniger oder nicht toxische Verbindungen umgewandelt.

Es handelt sich bei den Reduktionsmitteln um solche Substanzen mit hohem Reduktionspotenzial, nämlich Formamidinsulfinsäure (Thioharnstoffdioxid).

Es zeigte sich dabei, dass die Zugabe dieser Additive ausreichend sind, um die gewünschten Effekte zu erzielen.

In einer bevorzugten Ausführungsform wird zusätzlich ein Mittel hinzugefügt werden, dass die Erhöhung des pH-Wertes der lignocellulose-haltigen Zerkleinerungsprodukte und der fertigen Holzwerkstoffe aus Lignocellulose ermöglicht, insbesondere solche Stoffe, die den pH-Wert über den neutralen Bereich erhöhen. Diese zusätzlichen Stoffe können z. B. Hydroxide, wie Alkali- oder Erdalkalihydroxide sein. Alternativ kann auch Ammoniumhydroxid eingesetzt werden. Bevorzugt werden dabei Natriumhydroxid und Ammoniumhydroxid verwendet. Weitere geeignet Hydroxide schließen Kaliumhydroxid, Magnesiumhydroxid oder Calciumhydroxid ein.

Der Einsatz von alkalischen Substanzen ermöglicht auch eine höhere Löslichkeit von z. B. Formamidinsulfinsäure (FAS) in Wasser, unter alkalischen Bedingungen beträgt diese bis zu 100 g FAS /I, während FAS in neutralem Wasser nur mit circa 27 g / I löslich ist.

Es wurde vorliegend gefunden, dass durch Einsatz der Reduktionsmittel die Menge an flüchtigen organischen Verbindungen insbesondere an ungesättigten und gesättigten Aldehyden einschließlich Formaldehyd deutlich gesenkt werden kann. Eine Verringerung der Emissionen ist sowohl während der Herstellung als auch bei der späteren Verwendung möglich. Dieses ist umso überraschender als nicht davon ausgegangen werden konnte, dass aufgrund der Vielzahl von reaktiven Verbindungen, die auf Holzoberflächen vorhanden sind, und die potenziell mit den verwendeten Reduktionsmitteln reagieren, diese Additive wirksam VOC und insbesondere die Aldehyde in unproblematische Verbindungen umwandeln können.

Aus dem Stand der Technik ist die Umwandlung dieser ungesättigten Aldehyde auf dem oxidativen Weg bekannt. Dies hat aber den Nachteil, dass starke Oxidationsmittel entweder chlorhaltig sind oder durch ihre Oxidationskraft auch thermische Zusetzungen auslösen können. Das eine ist aufgrund der Dioxin-Problematik beim Verbrennen unerwünscht, das andere aufgrund der teilweise sehr trockenen Strands oder Fasern gefährlich. Starke Oxidationsmittel sind unter gesundheitlichen Aspekten als nicht unkritisch einzustufen. Im Übrigen zersetzen starke Oxidationsmittel auch die verwendeten Klebstoffe, was durch eine Höherdosierung des Klebstoffs kompensiert werden muss und zu einer Verteuerung der Produkte führt.

Aus der WO 20071012350 sind Bisulfitadditive bekannt, die zu einer geringeren Emission von chemischen Verbindungen beitragen sollen. Das Bisulfit sorgt aber für eine Veränderung des pH-Wertes als auch der Pufferkapazität sowohl des fertigen Holzwerkstoffes als auch der Einzelbestandteile während der Produktion und führt somit nicht zu dem gewünschten Effekt.

Vorliegend ist die Verwendung der genannten Additive insbesondere auch vorteilhaft dahingehend, dass die im Prozess teilweise entstehenden Schwefeldioxide ebenfalls Reaktionen mit ungesättigten Verbindungen eingehen können und diese in nicht flüchtige oder nicht toxische gesättigte Verbindungen umwandelt. Durch diese Umwandlung sind auch die befürchteten Geruchsbelästigungen im Herstellungsprozess oder in der Anwendung auszuschließen, ein Kriterium, welches bisher zur Nichtverwendung der genannten Additive führt.

Im Gegensatz zu dem Einsatz von Bisulfiten, die gemäß WO 20071012350 nur für Faserplatten einsetzbar sind, da das Bisulfit vor dem Refiner den Hackschnitzeln zugesetzt wird, erlauben die erfindungsgemäß verwendeten Additive den Einsatz in allen Holzwerkstoffen und zu verschiedensten Zeitpunkten der Produktion solange diese vor dem Heißverpressen liegen.

Des Weiteren sind die erfindungsgemäßen Additive insbesondere geeignet sowohl gesättigte als auch ungesättigte Aldehyde zu reduzieren.

Bevorzugt wird das Additiv in einer Menge von 0,5 bis 3 Gew.-% Feststoff bezogen auf atro Lignocellulose hinzugefügt. Das Additiv wird bevorzugt getrennt vom Klebstoff vorher oder danach zu den Zerkleinerungsprodukten der Lignocellulosen zugegeben werden. Zum Beispiel kann das Additiv in Lösung oder als Pulver auf die Strands oder die Fasern aufgebracht werden. Dabei hat es hier als besonders günstig erwiesen, dass wenn der Feuchtegehalt der Strands oder Fasern noch hoch ist, Pulver eingesetzt wird. Bei bereits getrockneten Strands oder Fasern ist der Einsatz von wässrigen Lösungen günstiger.

Ein Pulver könnte z. B. bei Strands nach der Zerspanung oder vor dem Nassspanbunker aufgebracht werden. Bei Fasern ist die Dosierung von Pulvern nach dem Refiner möglich.

Die wässrigen Lösungen können bei den Strands nach dem Trocknen oder in der Beleimung aufgebracht werden. Es ist aber auch jede andere Stelle möglich, an der die Strands durch eine Besprühung gut benetzt werden können. Da die Oberflächen in nicht unerheblicher Menge zu den Gesamtemissionen beitragen, besteht auch die Möglichkeit auf die bereits vorgestreute Strandkuchen vor der Presse die Additive aufzudüsen.

Erfindungsgemäß erfolgt das Einbringen des Additivs nach dem Zerspanen oder Zerfasern aber vor dem Verpressen unter Wärmebehandlung des Zerkleinerungsprodukts.

Die Lösung kann bei der Herstellung aller Holzwerkstoffe zum Einsatz kommen, wobei die Zugabe gemäß dem erfindungsgemäßen Verfahren zweckmäßigerweise über betriebsübliche Anlagen zur Klebstoffdosierung, wie Beleimtrommel, Blow-Line Beleimung oder Trockenbeleimung erfolgt. Bei Fasern bietet sich die Verwendung von Lösungen der erfindungsgemäßen Additive in der Blow-Line an.

Nach Applikation hat eine Behandlung zu erfolgen, derart, dass dem System ausreichende Energie, z. B. durch Wärme, zugeführt wird, dass eine Umsetzung der VOC und gesättigten und ungesättigten Aldehyde mit den Additiven erfolgt. Diese Behandlung kann z. B. das Heißverpressen der Zerkleinerungsprodukte sein.

Erfindungsgemäß können auch mehrere Verbindungen des Additivs verwendet werden. Die vorliegende Erfindung umfasst daher auch Verfahren, bei denen mindestens ein, zwei oder mehr Verbindungen der erfindungsgemäßen Additive verwendet werden.

Wie gesagt, kann die Dosierung der Additive im Bereich von 0,5 bis 3 Gew.-% Feststoff per atro Holzmasse liegen. Dabei kann durch eine gestaffelte Dosierung unterschiedlichstes Emissionsniveaus erreicht werden.

Bei den Lignocellulosen, wie den Holz- oder den Zerkleinerungsprodukten hiervon, kann es sich dabei sowohl um Nadelhölzer als auch um Laubhölzer handeln. Auch Mischungen dieser beiden Holzarten sind möglich. Bevorzugt stammen die Holzspäne, Strands oder Holzfasern von Nadelhölzern.

Die mit dem erfindungsgemäßen Herstellungsverfahren herstellbaren Holzwerkstoffe können gemäß bekannten Verfahren hergestellt werden. Dabei können dem Verfahren zusätzlich auch andere, dem Fachmann bekannte Verfahren zur Verminderung der Emission von flüchtigen organischen Verbindungen wie Aldehyden umfassen.

Bei den Holzwerkstoffen kann es sich bevorzugt um Spanplatten aus

Holzspänen, OSB-Strands aus Holzstrands und Holzfaserplatten, insbesondere MDF-Platten, aus Holzfasern handeln. Bevorzugt sind die herzustellenden Holzwerkstoffe OSB-Platten und leicht und superleichte MDF-Platten.

Unter Lignocellulosen werden ignocelluloseartige Materialien, wie Holz verstanden. Daraus erhaltene Zerkleinerungsprodukte von Lignocellulosen umfassen insbesondere Holzstrands, Holzspäne oder Holzfasern.

Die verwendeten Klebstoffe im erfindungsgemäßen Verfahren umfassen als Klebstoffe einen Phenol-Formaldehyd-Klebstoff (PF-Klebstoff), einen Klebstoff auf Basis von Isocyanaten (PMDI), einen Harnstoff-Formaldehyd-Klebstoff (UF-Klebstoff), einen Melamin-Harnstoff-Formaldehyd-Klebstoff (MUF-Klebstoff), einen Melamin-Harnstoff-Phenol-Formaldehyd-Klebstoff (MUPF-Klebstoff), einen Tannin-Formaldehyd-Klebstoff (TF-Klebstoff) oder ein Gemisch hiervon.

In einem weiteren Aspekt betrifft die vorliegende Erfindung eine Zusammensetzung und deren Verwendung zur Behandlung von Holzwerkstoffen, die auch als Fängerlösung bezeichnet werden kann, zur Behandlung von Holzwerkstoffen sowie Lignocellulose-haltigen Zerkleinerungsprodukten hiervon und zur Reduktion der Emission von gesättigten und ungesättigten Aldehyden und anderen flüchtigen organischen Verbindungen umfassen mindestens ein Additiv, wobei die Additive Formamidinsulfinsäure sind.

Die Zusammensetzung umfasst als Additiv Formamidinsulfinsäure.

Die Fängerlösung kann bei der Herstellung aller Holzwerkstoffe zum Einsatz kommen, wobei die Zugabe wie oben beschrieben erfolgen kann. Die Zugabe kann dabei vor oder nach dem Aufbringen des Klebstoffs erfolgen.

Die erfindungsgemäß erhältlichen Holzwerkstoffe zeichnen sich durch eine verringerte Emission an gesättigten und ungesättigten Aldehyden und anderen flüchtigen organischen Verbindungen aus.

Im Folgenden wird die Erfindung mit Hilfe von Beispielen näher erläutert, ohne dass sie auf diese beschränkt ist.

### Beispiel 1

### Herstellung von emissionsarmen OSB

Die emissionsarme OSB-Platte und die Referenzprobe ohne Additiv wurden aus identischen Strandmaterial (100% Kiefer) unter identischen Produktionsbedingungen hergestellt. Die Herstellungsparameter waren:

Einschichtige, von Hand gestreute OSB, Presstemperatur 220°C, Pressfaktor 12 s/mm, 200 bar Pressdruck. Die Herstellung der Platten erfolgte unter Verwendung von 5% PMDI (auf atro Strand) als Klebstoff. Der emissionsarmen OSB wurden zusätzlich 1 Gew.-% Formamidinsulfinsäure auf atro Strands zugegeben, das vor der Applikation im heißem Wasser gelöst wurde.

### Beispiel 2

### Bestimmung der Emission aus OSB

Die in Beispiel 1 hergestellten OSB-Platten wurden gemäß den folgenden Verfahren auf ihr Emissionsverhalten untersucht:

Die Proben OSB-K1 und K3 wurden in Prüfkammern (Volumen: V= 23,5 L) eingebracht. Die Prüfkammern wurden mit 3,1 Luftwechseln pro Stunde betrieben. Daraus resultiert eine flächenspezifische Luftdurchflussrate q = 1 m³m⁻²h⁻¹. In Anlehnung an die Vorgaben aller gängigen VOC-Prüfschemata verbleiben die Proben 28 Tage in den Prüfkammern mit normgerechtem Klima (23 °C und 50 % r.Lf.). Die Luftprobenahmen wurden auf Tenax TA durchgeführt mit Probenahmevolumina von 1 bis 2 L.

Die Quantifizierung erfolgt über eine lineare Mehrpunktkalibrierung der entsprechenden Referenzsubstanzen sowie dem relativen Responsefaktor des internen Standards (Toluold8). Verbindungen, für die kein entsprechender Standard verfügbar war, wurden substanzähnlich quantifiziert (vgl. Tabelle 2). Im Folgenden sind verwendete Geräte und Parameter dargestellt:

**Tabelle 1: Verwendetes GC/MS-System**

| | |
|---|---|
| Thermodesorptionseinheit | TDS 3, Fa. Gerstel, Mühlheim a. d. Ruhr |
| Gaschromatograph | Agilent 6895 |
| Trägergas | Helium |
| Säule | Zebron ZB1701, 30m, 0,25 mm, 025 m 14 % Cyanopropylphenyl-methylpolysiloxan |
| Kühlfalle | KAS, Glass Liner, gefüllt mit Tenax TA |
| Detektor | Agilent 5973N |
| | 29-400 amu; 3,8 scans s-1 |
| **Thermodesorption** | |
| Starttemperatur | 20 °C |
| Endtemperatur | 280 °C |
| Aufheizrate | 60 °C s-1 |
| Hold | 4 min |
| **Kühlfalle** | |
| Starttemperatur | -30 °C |
| Endtemperatur | 280 °C |
| Aufheizrate | 12 °C s-1 |
| Hold | 3 min |
| Split-Verhältnis | 1:20 |
| **Ofenprogramm** | |
| 40 °C, 4 min. halten | |
| 6 °C min-1 bis 90 °C, 4min: halten | |
| 8 °C min-1 bis 200 °C | |
| 12 °C min-1 bis 280 °c; 5 min: halten | |
| Säulenfluss 1,2 ml min.-1 | |

**Tabelle 2: Standards zur Quantifizierung von Nebenkomponenten**

| Verbindung | Standard |
|---|---|
| Terpene | α-*Pinen*, Toluol |
| Aldehyde | Pentanal, Nonanal |
| Ungesättigte Aldehyde | 1-Heptenal |
| Alkohole | 1-Pentanol |
| Sonstige Verbindungen | Toluol (IS) |
| | |

Die in der Tabelle 3 (Referenzprobe, OSB K1) und der Tabelle 4 (OSB mit 1 Gew.-% FAS, OSB K3) dargestellten Ergebnisse zeigen, dass bei den erfindungsgemäß hergestellten OSB-Platten die Emissionswerte für gesättigte und ungesättigte Aldehyde gering sind. Die Emissionsverhalten für Terpene und für VOC insgesamt waren ebenfalls befriedigend.

**Tabelle 3: Einzel- und Summenwerte der Probe OSB K1**

| **OSB K1** | | ausschließlich C≥3 µg/m³ Probevolumen | C 3 Tage 1 L | C 7 Tage 1 L | C 14 Tage 2 L | C 21 Tage 2 L | C 28 Tage 2 L | NIK | Ri ohne NIK | |
|---|---|---|---|---|---|---|---|---|---|---|
| | | | µg/m³ | µg/m³ | µg/m³ | µg/m³ | µg/m³ | µg/m³ | - | µg/m³ |
| | | Tricyclen | n.b | n.b. | n.b. | n.b. | n.b. | 1400 | 0,0000 | |
| | | Thujen | 6,7 | n.b. | n.b. | n.b. | n.b. | 1400 | 0,0000 | |
| | | a-Pinen | 1072,3 | 388,7 | 183,1 | 124,7 | 109,1 | 1400 | 0,0779 | |
| | | Camphen | 10,4 | 3,2 | | n.b. | n.b. | n.b. | 1400 | |
| | 0,0000 | | | | | | | | | |
| | | b-Pinen | 190,8 | 54,0 | | 21,3 | 13,3 | 11,4 | 1400 | |
| | 0,0081 | | | | | | | | | |
| Terpene | | Myrcen | 13,4 | 6,2 | n.b. | n.b. | n.b. | 1400 | 0,0000 | |
| | | 3-Caren | 947,1 | 355,6 | 160,4 | 97,6 | 88,9 | 1400 | 0,0635 | |
| | | Limonen | 24,0 | 13,0 | 6,6 | 4,1 | 3,5 | 1400 | 0,0025 | |
| | | Phellandren | 7,0 | n.b. | | n.b. | n.b. | n.b. | 1400 | |
| | 0,0000 | | | | | | | | | |
| | | Terpinen | n.b. | n.b. | | n.b. | n.b. | n.b. | 1400 | |
| | 0,0000 | | | | | | | | | |
| | | Terpinolen | 6,2 | 3,6 | n.b. | n.b. | n.b. | 1400 | 0,0000 | |
| *Summe* | | | 2277,9 | 824,2 | 371,4 | 239,7 | 212,8 | | | |
| | | Pentanal | 7,3 | 14,8 | 25,2 | | 21,1 | 23,5 | 1700 | |
| | 0,0138 | | | | | | | | | |
| | | Hexanal | 76,6 | 157,8 | 184,5 | | 139,5 | 148,3 | 890 | |
| | 0,1666 | | | | | | | | | |
| ges. Aldehyde | | Heptanal | n.b. | n.b. | n.b. | n.b. | 3,6 | 1000 | 0,0036 | |
| | | Octanal | n.b. | n.b. | 3,9 | | 4,8 | 6,4 | 1100 | |
| | 0,0058 | | | | | | | | | |
| | | Nonanal | n.b. | n.b. | n.b. | | n.b. | 4,2 | 1300 | |
| | 0,0032 | | | | | | | | | |
| *Summe* | | | 83,9 | 172,5 | 213,5 | | 165,4 | 185,9 | | |
| | | 2-Heptenal | n.b. | n.b. | n.b. | | n.b. | 3,7 | 16 | |
| | 0,2306 | | | | | | | | | |
| unges. Aldehyde | | | | | | | | | | |
| | | 2-Octenal | n.b. | n.b. | 5,5 | 5,1 | 8,2 | 18 | 0,4550 | |
| *Summe* | | | 0,0 | 0,0 | 5,5 | | 5,1 | 11,9 | | |
| | | Furfural | n.b. | n.b. | n.b. | | n.b. | n.b. | 20 | |
| | 0,0000 | | | | | | | | | |
| Andere Aldehyde | | | | | | | | | | |
| | | Benzaldehyd | n.b. | n.b. | 4,1 | | 4,3 | 5,0 | 90 | |
| | 0,0550 | | | | | | | | | |
| *Summe* | | | 0,0 | 0,0 | 4,1 | 4,3 | 5,0 | | | |
| | | Essigsäure | n.b. | n.b. | n.b. | n.b. | 47,4 | 500 | 0,0948 | |
| org. Säuren | | | | | | | | | | |
| | | n-Hexansäure | n.b. | n.b. | n.b. | n.b. | 4,2 | 490 | 0,0086 | |
| *Summe* | | | 0,0 | 0,0 | 0,0 | 0,0 | 51,6 | | | |
| **aliphat.** | **Alkohole** | **1-Pentanol** | **n.b.** | **n.b.** | **4.1** | | **4.1** | **n.b.** | **3600** | |
| | **0.0000** | | | | | | | | | |
| | | Toluol | n.b. | n.b. | n.b. | n.b. | n.b. | 1900 | 0,0000 | |
| aromat. Kohlenwasserstoffe | | p-Cymol | 14,9 | 6,9 | 4,4 | n.b. | n.b. | 1100 | 0,0000 | |
| | | m-Cymol | n.b. | n.b. | n.b. | n.b. | n.b. | 1100 | 0,0000 | |
| | | p-Cymol | 23,0 | 10,7 | 6,2 | 3,7 | n.b. | 1100 | 0,0000 | |
| *Summe* | | | 37,9 | 17,6 | 10,6 | 3,7 | 0,0 | | | |
| **Gesamtsumme** | | | **2399.7** | **1014.3** | **609,2** | **422,2** | **467,2** | | **1,2** | **0.0** |

**Tabelle 4: Einzel- und Summenwerte der Probe OSB K3**

| **OSB K3** | | ausschließlich C ≥ 3 µg/m³ Probevolumen | C 3 Tage 1 L | C 7 Tage 1 L | C 14 Tage 2 L | C 21 Tage 2 L | C 28 Tage 2 L | NIK | Ri ohne NIK | |
|---|---|---|---|---|---|---|---|---|---|---|
| | | | µg/m³ | µg/m³ | µg/m³ | µg/m³ | µg/m³ | µg/m³ | - | µg/m³ |
| | | Tricyclen | 3,5 | n.b. | n.b. | n.b. | n.b. | 1400 | 0,0000 | |
| | | Thujen | 10,5 | 4,4 | n.b. | n.b. | n.b. | 1400 | 0,0000 | |
| | | a-Pinen | 1340,9 | 584,5 | 231,2 | 148,6 | 152,2 | 1400 | 0,1087 | |
| | | Camphen | 12,9 | 5,1 | | n.b. | n.b. | n.b. | 1400 | |
| | 0,0000 | | | | | | | | | |
| | | b-Pinen | 241,7 | 115,4 | 41,0 | 24,7 | 24,3 | 1400 | 0,0174 | |
| Terpene | | Myrcen | 15,8 | 11,4 | 5,4 | 3,0 | n.b. | 1400 | 0,0000 | |
| | | 3-Caren | 1063,3 | 658,5 | 275,1 | 169,4 | 148,0 | 1400 | 0,1057 | |
| | | Limonen | 18,1 | 13,4 | 6,9 | 4,3 | 3,6 | 1400 | 0,0025 | |
| | | Phellandren | 13,8 | 9,1. | | 3,9. | n.b. | n.b. | 1400 | |
| | 0,0000 | | | | | | | | | |
| | | Terpinen | 8,7 | 6,1 | n.b. | n.b. | n.b. | 1400 | 0.0000 | |
| | | Terpinolen | 17,3 | 17,7 | 5,5 | n.b. | 4,5 | 1400 | 0,0032 | |
| *Summe* | | | 2746,5 | 1425,4 | 569,0 | 349,9 | 332,6 | | | |
| | | Pentanal | n.b. | n.b. | n.b. | n.b. | 3,2 | 1700 | 0,0093 | |
| | | Hexanal | 8,5 | 11,9 | 15,6 | 15,3 | 18,1 | 890 | 0,0203 | |
| ges. Aldehyde | | Heptanal | n.b. | n.b. | n.b. | n.b. | n.b. | 1000 | 0,0000 | |
| | | Octanal | n.b. | n.b. | n.b. | n.b. | n.b. | 1100 | 0,0000 | |
| | | Nonanal | n.b. | n.b. | n.b. | | n.b. | n.b. | 1300 | |
| | 0,0000 | | | | | | | | | |
| *Summe* | | | 8.5 | 11,9 | 15,6 | 15,3 | | 21,3 | | |
| | | | | | | | | | | |
| | | 2-Heptenal | n.b. | n.b. | n.b. | | n.b. | n.b. | 16 | |
| | 0,0000 | | | | | | | | | |
| unges. Aldehyde | | | | | | | | | | |
| | | 2-Octenal | n.b. | n.b. | n.b. | | n.b. | n.b. | 18 | |
| | 0,0000 | | | | | | | | | |
| *Summe* | | | 0,0 | 0,0 | 0,0 | | 0,0 | 0,0 | | |
| | | Furfural | n.b. | n.b. | n.b. | | n.b. | n.b. | 20 | |
| | 0,0000 | | | | | | | | | |
| Andere Aldehyde | | | | | | | | | | |
| | | Benzaldehyd | n.b. | n.b. | n.b. | n.b. | n.b. | 90 | 0,0000 | |
| *Summe* | | | 0,0 | 0,0 | 0,0 | 0,0 | 3,2 | | | |
| | | Essigsäure | n.b. | n.b. | n.b. | n.b. | 23,3 | 500 | 0,0466 | |
| org. Säuren | | | | | | | | | | |
| | | n-Hexansäure | n.b. | n.b. | n.b. | n.b. | n.b. | 490 | 0,0000 | |
| *Summe* | | | 0,0 | 0,0 | 0,0 | 0,0 | 23,3 | | | |
| **aliphat, Alkohole** | | **1-Pentanol** | | | | | | **3600** | **0,0000** | |
| | | Toluol | 4,2 | 4,6 | n.b. | n.b. | n.b. | 1900 | 0,0000 | |
| aromat. Kohlenwasserstoffe | | o-Cymol | 10,6 | 4,8 | 3,3 | n.b. | n.b. | 1100 | 0,0000 | |
| | | m-Cymol | n.b. | n.b. | n.b. | n.b. | n.b. | 1100 | 0,0000 | |
| | | p-Cymol | 13,8 | 9,1 | 6,7 | 4,5 | 3,9 | 1100 | 0,0036 | |
| *Summe* | | | 28,7 | 18,5 | 9,9 | 4,5 | 3,9 | | | |
| **Gesamtsumme** | | | **2783,7** | **1455,9** | **594.5** | **369,7** | **381,1** | | **0,3** | **0.0** |

Wie aus den Beispielen deutlich wird, ist es erfindungsgemäß möglich, die Aldehyd-Emissionen gegenüber der Referenzprobe deutlich mit Hilfe der erfindungsgemäßen Zusammensetzung zu verringern. Insbesondere wird deutlich, dass im Gegensatz zur Referenzprobe keine ungesättigten Aldehyde nachgewiesen werden konnten. Das Gleiche gilt für das Auftreten organischer Säuren.

Die so erhaltenen Holzwerkstoffe zeichnen sich auch im späteren Gebrauch durch verringerte Aldehyde und geringe VOC Emissionen aus.

## Patentansprüche

1. Verwendung von Formamidinsulfinsäure zur Verminderung der Emission von flüchtigen organischen Verbindungen (VOC), insbesondere gesättigten und ungesättigen Aldehyden, bei der Herstellung von Holzwerkstoffen aus Lignocellulose, wobei die Lignocellulose-haltigen Zerkleinerungsprodukte mit Klebstoff gemischt werden und die Mischung unter Wärmebehandlung verpresst wird, **dadurch gekennzeichnet, dass** den Zerkleinerungsprodukten vor dem Verpressen aber nach dem Zerfasern oder Zerspanen Formamidinsulfinsäure als Additiv hinzugefügt wird.

2. Verwendung nach Anspruch 1, **dadurch gekennzeichnet, dass** die Holzwerkstoffe solche sind, hergestellt aus Holzspäne, Holzstrands und Holzfasern als Lignocellulose-haltiges Zerkleinerungsprodukt.

3. Verwendung nach einem der vorherigen Ansprüche, wobei die Holzwerkstoffe Spanplatten, Faserplatten oder OSB-Platten sind.

4. Verwendung gemäß einem der vorherigen Ansprüche, **dadurch gekennzeichnet, dass** die Menge an zugegebenem Additiv zwischen 0,5 bis 3 Gew.-% Feststoff bezogen auf atro Lignocellulose ist.

5. Verwendung gemäß einem der vorherigen Ansprüche, **dadurch gekennzeichnet, dass** das Additiv vor oder nach dem Klebstoff zu den Zerkleinerungsprodukten der Lignocellulosen zugegeben wird.

6. Verwendung gemäß einem der vorherigen Ansprüche, **dadurch gekennzeichnet, dass** der verwendete Klebstoff ein Phenol-Formaldehyd-Klebstoff (PF-Klebstoff), ein Klebstoff auf Basis von Isocyanaten (PMDI), ein Harnstoff-Formaldehyd-Klebstoff (UF-Klebstoff), ein Melamin-Harnstoff-Formaldehyd-Klebstoff (MUF-Klebstoff), ein Melamin-Harnstoff-Phenol-Formaldehyd-Klebstoff (MUPF-Klebstoff), ein Tannin-Formaldehyd-Klebstoff (TF-Klebstoff) oder ein Gemisch hiervon ist.

7. Verwendung gemäß einem der vorherigen Ansprüche, **dadurch gekennzeichnet, dass** das Additiv in Form eines Feststoffes oder in flüssiger Form aufgebracht wird.

8. Verwendung gemäß einem der vorherigen Ansprüche, **dadurch gekennzeichnet, dass** das Aufbringen eines Pulvers der erfindungsgemäßen Additive nach der Zerspanung oder vor dem Nassspanbunker im Falle von Holzstrands als Lignocellulose-Zerkleinerungsprodukte erfolgt.

9. Verwendung gemäß einem der Ansprüche 1 bis 8, wobei das Aufbringen des Pulvers bei Holzfasern als Zerkleinerungsprodukte der Lignocellulosen vor oder nach dem Refiner erfolgt.

10. Verwendung gemäß einem der Ansprüche 1 bis 8, wobei die Additive als Lösungen im Blow-Line-Schritt auf die Zerkleinerungsprodukte der Lignocellulose aufgebracht werden.

11. Verwendung nach einem der vorherigen Ansprüche, **dadurch gekennzeichnet, dass** das Additiv auf die gestreuten Strand- oder Faserkuchen als wässrige Lösung aufgebracht wird.

12. Holzwerkstoff erhältlich unter Verwendung von Formamidinsulfinsäure zur Verminderung der Emission von flüchtigen organischen Verbindungen (VOC), insbesondere gesättigten und ungesättigten Aldehyden, mit einem Verfahren umfassend die Schritte:
- Bereitstellen von Lignocellulose-haltigen Zerkleinerungsprodukten;
- Bereitstellen von Klebstoff;
- Mischen von Lignocellulose-haltigen Zerkleinerungsprodukten mit Klebstoffen;
- Verpressen der Mischung unter Wärmebehandlung, **dadurch gekennzeichnet, dass** zur Vermeidung der Emission von flüchtigen organischen Verbindungen (VOC), insbesondere gesättigten und ungesättigten Aldehyden, den Zerkleinerungsprodukten vor dem Verpressen aber nach dem Zerfasern oder Zerspanen weiterhin mindestens ein Additiv, das ein Reduktionsmittel, nämlich Formamidinsulfinsäure, ist, zugesetzt wird.

13. Holzwerkstoff nach Anspruch 12, wobei es sich um Faserplatten oder um OSB-Platten handelt.

14. Holzwerkstoff nach Anspruch 13, wobei die Faserplatten leichte und superleichte MDF-Platten sind.

## Claims

1. Use of formamidinesulphinic acid to reduce the evolution of volatile organic compounds (VOCs), especially saturated and unsaturated aldehydes, in the production of wood-base materials from lignocellulose, wherein the lignocellulose-containing comminution products are mixed with adhesive and the mixture is compression moulded under heat treatment, **characterized in that** formamidinesulphinic acid is added as an additive to the comminution products before compression moulding but after defibration or chipping.

2. Use according to Claim 1, **characterized in that** the wood-base materials are produced from wood chips, wood strands and wood fibres as lignocellulose-containing comminution product.

3. Use according to either preceding claim, wherein the wood-base materials are chipboard panels, fibreboard panels or OSB panels.

4. Use according to any preceding claim, **characterized in that** the amount of additive added is between 0.5 to 3% by weight of solid, based on absolutely dry lignocellulose.

5. Use according to any preceding claim, **characterized in that** the additive is added to the comminution products of lignocelluloses before or after the adhesive.

6. Use according to any preceding claim, **characterized in that** the adhesive used is a phenol-formaldehyde adhesive (PF adhesive), an adhesive based on isocyanates (PMDI), a urea-formaldehyde adhesive (UF adhesive), a melamine-urea-formaldehyde adhesive (MUF adhesive), a melamine-urea-phenol-formaldehyde adhesive (MUPF adhesive), a tannin-formaldehyde adhesive (TF adhesive) or a mixture thereof.

7. Use according to any preceding claim, **characterized in that** the additive is applied as a solid or in liquid form.

8. Use according to any preceding claim, **characterized in that** a powder of additives according to the invention is applied after chipping or upstream of the wet chip silo in the case of wood strands as lignocellulose comminution products.

9. Use according to any of Claims 1 to 8, wherein the powder is applied before or after the refiner in the case of wood fibres as comminution products of lignocelluloses.

10. Use according to any of Claims 1 to 8, wherein the additives are applied to the comminution products of lignocellulose as solutions in the blowline step.

11. Use according to any preceding claim, **characterized in that** the additive is applied as an aqueous solution to the formed cake of strands or fibres.

12. Wood-base material obtainable using formamidinesulphinic acid to reduce the evolution of volatile organic compounds (VOCs), especially saturated and unsaturated aldehydes, with a process comprising the steps of:
- providing lignocellulose-containing comminution products;
- providing adhesive;
- mixing lignocellulose-containing comminution products with adhesives;
- compression moulding the mixture under heat treatment, **characterized in that** to avoid the evolution of volatile organic compounds (VOCs), especially saturated and unsaturated aldehydes, the comminution products before compression moulding but after defibration or chipping further have added to them at least one additive which is a reducing agent, namely formamidinesulphinic acid.

13. Wood-base material according to Claim 12, wherein fibreboard panels or OSB panels are concerned.

14. Wood-base material according to Claim 13, wherein the fibreboard panels are light and superlight MDF panels.

## Revendications

1. Utilisation d'acide formamidine-sulfinique pour la diminution de l'émission de composés organiques volatils (COV), notamment d'aldéhydes saturés et insaturés, lors de la fabrication de matériaux dérivés de bois à base de lignocellulose, les produits de broyage contenant de la lignocellulose étant mélangés avec un adhésif et le mélange étant comprimé avec traitement thermique, **caractérisée en ce que** de l'acide formamidine-sulfinique est ajouté en tant qu'additif aux produits de broyage avant la compression mais après le défibrage ou la fragmentation.

2. Utilisation selon la revendication 1, **caractérisée en ce que** les matériaux dérivés de bois sont fabriqués à partir de copeaux de bois, de copeaux longs de bois et de fibres de bois en tant que produit de broyage contenant de la lignocellulose.

3. Utilisation selon l'une quelconque des revendications précédentes, dans laquelle les matériaux dérivés de bois sont des panneaux de particules, des panneaux de fibres ou des panneaux OSB.

4. Utilisation selon l'une quelconque des revendications précédentes, **caractérisée en ce que** la quantité d'additif ajouté est comprise entre 0,5 et 3 % en poids de solide par rapport à la lignocellulose de sicc. abs.

5. Utilisation selon l'une quelconque des revendications précédentes, **caractérisée en ce que** l'additif est ajouté avant ou après l'adhésif aux produits de broyage de lignocellulose.

6. Utilisation selon l'une quelconque des revendications précédentes, **caractérisée en ce que** l'adhésif utilisé est un adhésif phénol-formaldéhyde (adhésif PF), un adhésif à base d'isocyanates (PMDI), un adhésif urée-formaldéhyde (adhésif UF), un adhésif mélamine-urée-formaldéhyde (adhésif MUF), un adhésif mélamine-urée-phénol-formaldéhyde (adhésif MUPF), un adhésif tanin-formaldéhyde (adhésif TF) ou un de leurs mélanges.

7. Utilisation selon l'une quelconque des revendications précédentes, **caractérisée en ce que** l'additif est appliqué sous la forme d'un solide ou sous forme liquide.

8. Utilisation selon l'une quelconque des revendications précédentes, **caractérisée en ce que** l'application d'une poudre des additifs selon l'invention a lieu après la fragmentation ou avant le silo de copeaux humides dans le cas de copeaux longs de bois en tant que produits de broyage de lignocellulose.

9. Utilisation selon l'une quelconque des revendications 1 à 8, dans laquelle l'application de la poudre a lieu avant ou après le raffineur dans le cas de fibres de bois en tant que produits de broyage de lignocellulose.

10. Utilisation selon l'une quelconque des revendications 1 à 8, dans laquelle les additifs sont appliqués sous la forme de solutions dans l'étape d'installation de soufflage sur les produits de broyage de la lignocellulose.

11. Utilisation selon l'une quelconque des revendications précédentes, **caractérisée en ce que** l'additif est appliqué sous la forme d'une solution aqueuse sur les mats de copeaux ou de fibres éparpillés.

12. Matériau dérivé de bois pouvant être obtenu en utilisant de l'acide formamidine-sulfinique pour diminuer l'émission de composés organiques volatils (COV), notamment d'aldéhydes saturés et insaturés, par un procédé comprenant les étapes :
- la préparation de produits de broyage contenant de la lignocellulose ;
- la préparation d'un adhésif ;
- le mélange des produits de broyage contenant de la lignocellulose avec les adhésifs ;
- la compression du mélange avec traitement thermique, **caractérisé en ce qu'**au moins un additif, qui est un réducteur, à savoir l'acide formamidine-sulfiniqne, est également ajouté aux produits de broyage avant la compression mais après le défibrage ou la fragmentation pour éviter l'émission de composés organiques volatils (ÇOV), notamment d'aldéhydes saturés et insaturés.

13. Matériau dérivé de bois selon la revendication 12, dans lequel il s'agit de panneaux de fibres ou de panneaux OSB.

14. Matériau dérivé de bois selon la revendication 13, dans lequel les panneaux de fibres sont des panneaux de MDF légers et super-légers.
